(19) Europäisches Patentamt

European Patent Office

Office européen des brevets

(11) Veröffentlichungsnummer: **0 171 012 B1**

## (12) EUROPÄISCHE PATENTSCHRIFT

(45) Veröffentlichungstag der Patentschrift: **01.04.92**

(21) Anmeldenummer: **85109518.2**

(22) Anmeldetag: **29.07.85**

(51) Int. Cl.⁵: $G02F\ 1/11$, $G02F\ 1/33$

(54) **Akustooptische Vorrichtung und Verfahren zu ihrer Herstellung.**

(30) Priorität: **01.08.84 US 636640**
**01.08.84 US 636766**

(43) Veröffentlichungstag der Anmeldung:
**12.02.86 Patentblatt 86/07**

(45) Bekanntmachung des Hinweises auf die
Patenterteilung:
**01.04.92 Patentblatt 92/14**

(84) Benannte Vertragsstaaten:
**DE FR GB NL SE**

(56) Entgegenhaltungen:
**DD-A- 159 116          DE-A- 2 120 123**
**DE-A- 2 640 865          DE-B- 2 021 621**
**US-A- 3 591 254          US-A- 4 336 982**

(73) Patentinhaber: **SIEMENS AKTIENGESELL-
SCHAFT
Wittelsbacherplatz 2
W-8000 München 2(DE)**

(72) Erfinder: **Roos, Edward V.
345 Almond Avenue
Los Altos, CA 94022(US)**
Erfinder: **Amano, Masaharu
1920 Rock Street No. 9
Mountainview, CA 94043(US)**
Erfinder: **Scheff, Victor
1799 Euclid No. 24
Berkeley, CA 94709(US)**

## Beschreibung

Die Erfindung betrifft eine akustooptische Vorrichtung nach dem Oberbegriff des Patentanspruchs 1 und ein Verfahren zu ihrer Herstellung.

Es sind bereits Vorrichtungen der genannten Art vorgeschlagen worden, bei denen die Metallelektrodenschichten die Oberfläche des Basiskprpers teilweise abdecken, so daß die akustischen Druckwellenfronten das Volumen des Basiskörpers nur teilweise ausfüllen.

Aus der DD-A-159 116 ist eine akustooptische Vorrichtung mit einem Basiskörper aus einem Wechselwirkungsmaterial zur Kopplung akustischer Druckwellen mit optischen Wellen bekannt, bei welcher der Basiskörper ein optisches Fenster zum Einkoppeln einer optischen Welle und eine akustische Grenzfläche zum Einkoppeln einer akustischen Druckwelle in den Basiskörper aufweist. Die Vorrichtung weist auch eine durch eine zwischenliegende Bindeschicht aus elektrisch leitendem Material flächig mit der akustischen Grenzfläche des Basiskörpers verbundenen Wandlerschicht zur Erzeugung der durch die Bindeschicht in den Basiskörper eingekoppelten akustischen Druckwelle durch Anlegen eines elektrischen Signals zwischen einer auf der Wandlerschicht aufgebrachten Metallelektrodenschicht und einem seitlich neben der Wandlerschicht freiliegenden Streifen der Bindeschicht auf. Die Metallelektrodenschicht deckt die Wandlerschicht vollständig ab.

Auch bei dieser bekannten Vorrichtung füllen die akustischen Druckwellenfronten wegen des seitlichen Streifens das Volumen des Basiskörpers nicht vollständig aus.

Aus der DD-A-159 116 ist es auch bekannt, die Wandlerschicht aus Lithiumniobat zu fertigen.

Aus der US-A-4 336 982 ist ein Wechselwirkungsmaterial zur Kopplung akustischer Druckwellen mit optischen Wellen bekannt, das aus Tellurdioxid besteht.

Aufgabe der Erfindung ist es, eine Vorrichtung der eingangs genannten Art dahingehend zu verbessern, daß die akustischen Druckwellenfronten ein größeres Volumen des Basiskörpers ausfüllen.

Diese Aufgabe wird durch die im kennzeichnenden Teil des Patentanspruchs 1 angegebenen Merkmale gelöst. Bevorzugte Ausgstaltungen der Erfindung gehen aus den Ansprüchen 2 und 3 hervor.

Ein bevorzugtes und vorteilhaftes Verfahren zur Herstellung der erfindungsgemäßen Vorrichtung geht aus Anspruch 4 hervor. Zum vollständigen Verständnis der vorliegenden Erfindung sollte nun Bezug auf die folgende detaillierte Beschreibung der bevorzugten Ausführungsformen der Erfindung und auf die beigefügten Zeichnungen genommen werden. Von den Figuren zeigen:

Figuren 1 bis 4
Stand der Technik-Darstellungen, welche die verschiedenen Schritte bei der Produktion einer akustooptischen Vorrichtung zeigen;

Figur 5
den aufgrund von Beugungsphänomenen sich ausbreitenden Strahl in einer herkömmlichen Vorrichtung;

Figur 6
das Strahlablenkungsprinzip einer akustooptischen Vorrichtung;

Figur 7 und 8
bekannte Elektrodenmuster-Designs zur Minimierung der Strahlausbreitungseffekte;

Figur 9
eine akustische Strahlausbreitung in einer erfindungsgemäßen Vorrichtung;

Figur 10
einen Grundkörper aus einem optischen Wechselwirkungsmaterial, auf dessen Wandlerschicht Elektroden in Form zweier länglicher Streifen aufgebracht sind und aus dem erfindungsgemäße akustooptische Zellen produziert werden können;

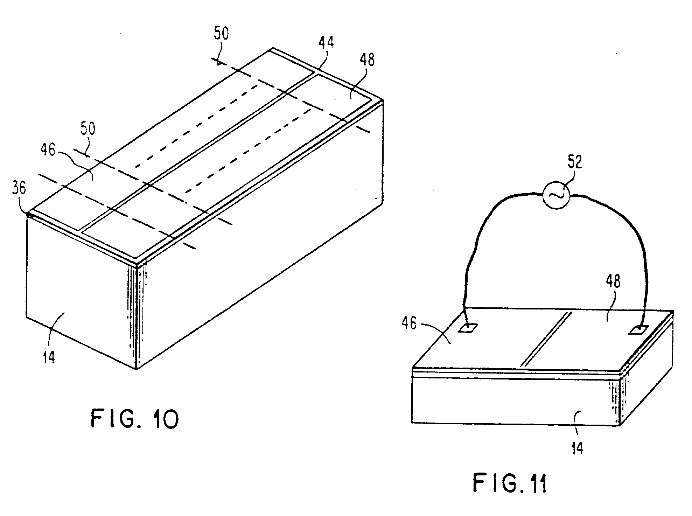

Figur 11
eine aus dem Körper nach Figur 10 resultierende akustooptische Zelle.

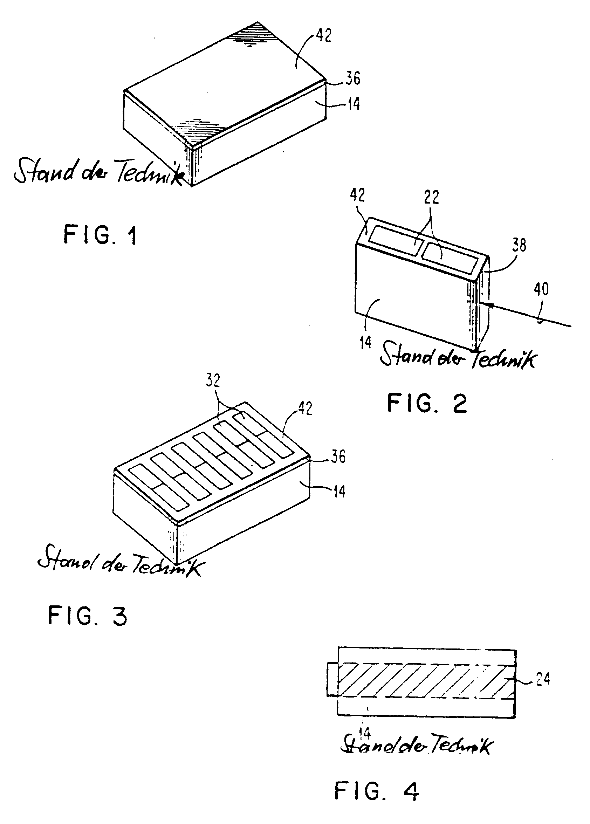

Die Erfindung wird nun unter Bezugnahme auf die Figuren 1 bis 11 der Zeichnungen beschrieben.

Der akustooptische Effekt bezieht sich auf die Wechselwirkung optischer Wellen mit akustischen Wellen in einem Wechselwirkungsmaterial. Ein Ergebnis dieser Wechselwirkung liegt darin, daß die optischen Wellen ähnlich wie bei einem geblazten Beugungsgitter in gewissen Richtungen oder Ordnungen abgebeugt werden. Durch diesen Effekt kann eine optische Größe durch Manipulieren einer anderen Größe, nämlich einer akustischen Welle gesteuert oder kontrolliert werden. Vereinfachend kann gesagt werden, daß eine akustooptische Vorrichtung die folgenden drei Komponenten kombiniert. Ein Wechselwirkungsmedium, in welchem die optischen Wellen und die akustischen Wellen oder Ultraschallwellen wechselwirken, ein Wandler, der die akustooptischen Wellen erzeugt und aus dem diese Wellen in das Wechselwirkungsmedium gekoppelt werden, und Elekroden, durch welche elektrische Leistung an den Wandler angelegt wird und welche den Wandler veranlassen, akustische Wellen zu erzeugen. Da jedoch die akustischen Eigenschaften des Wandlers durch den Typ oder die Art und die Größe des elektrischen Eingangssignals beeinflußt werden, ist leicht einzusehen, daß letztendlich die optischen Wellen, die in das Wechselwirkungsmedium eindringen, elektrisch gesteuert werden.

Während der letzten Dekade sind akustooptische Vorrichtungen zunehmend zur Laserstrahlsteuerung benutzt worden. Laser-Computer-Druck-systeme, Laserplattenherstellung, Videoplattenauf-zeichnung, Faksimilesysteme und verschiedene andere Anwendungen stehen mit akustooptischen Vorrichtungen in Verbindung.

Typischerweise wird ein akustooptischer Modulator aus einem Material hergestellt, der einen hohen akustooptischen Dynamikbereich aufweist, beispielsweise aus einem kristallinen Tellurdioxid ($TeO_2$), mit dem ein piezoelektrisches Wandlerma-terial, beispielsweise Lithiumniobat ($LiNbO_3$), ver-bunden ist. Eine mit der Vorrichtung durch Elektroden verbundene Radio- oder Hochfrequenzquelle regt den Wandler zu Schwingungen an. Diese Schwingungen werden durch Bindeschichten in das akustooptische Material eingekoppelt, wo sie sich als akustische Druckwellen ausbreiten und periodische Variationen der Brechzahl des Mediums verursachen. Die Variationen haben die gleiche Frequenz wie die Hochfrequenzquelle und sind mit dieser in Phase. Wenn die einfallenden Strahlen, beispielsweise ein Laserstrahl im Braggwinkel in Bezug auf die akustischen Wellenfronten in dem Medium richtig fokussiert sind, wird ein Teil der optischen Leistung unter einem Winkel gebeugt, der gleich dem Doppelten des Braggwinkels ist.

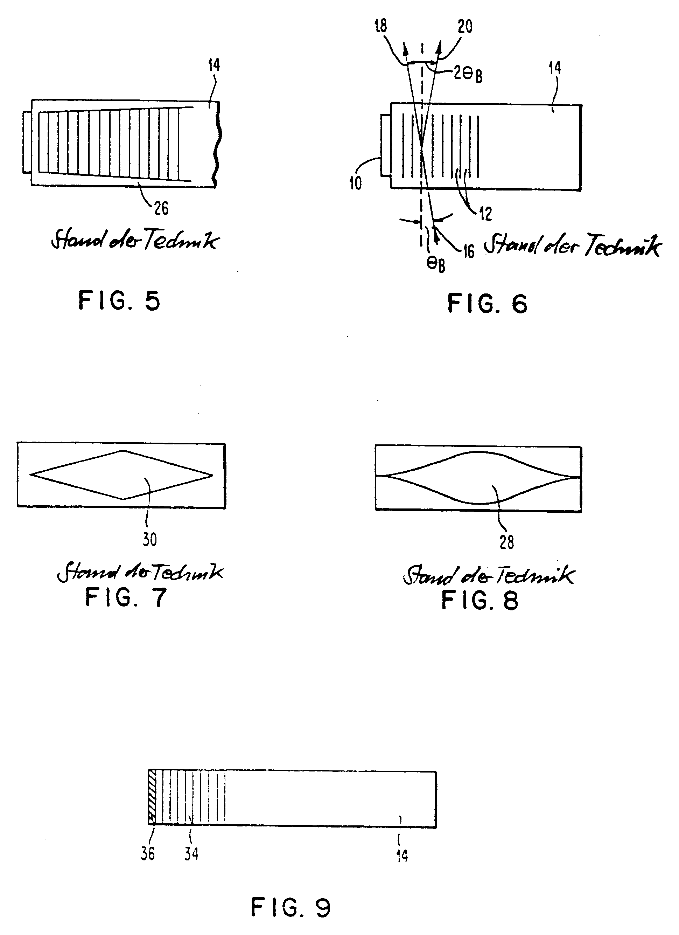

Die Prinzipien, welche die Arbeitsweise einer akustooptischen Vorrichtung beherrschen, können leicht unter Bezugnahme auf die Figur 6 der Zeichnung verstanden werden. Innerhalb eines Basiskörpers 14 optisch transparentem Material wird durch elektrische Aktivierung eines Wandlers 10 ein Phasengitter ausgebildet, das als Linien 12 angedeutet ist. Allgemein wird das Phasengitter 12 durch eine Brechzahländerung aufgrund des sog. fotoelastischen bzw. elektrischen Effekts erzeugt. Die Stärke dieser Änderung hängt von der Schallamplitude und der Größe des fotoelektrischen Effekts des speziellen Materials ab. Wenn ein Lichtstrahl durch den Basiskörper 14 aus dem optisch transparenten Material unter einem Winkel $\theta_B$ zur Ebene der sich ausbreitenden akustischen Welle hindurchgeht, wird dieser Strahl in einen Satz mehrerer Strahlen gebeugt. Unter wohlbekannten Bedingungen existieren im wesentlichen nur zwei Beugungsordnungen, der Strahl 18 nullter Ordnung und der Strahl 20 erster Ordnung. Dies stellt die sog. Bragg-Bedingung akustooptischer Wechselwirkung dar. Wenn die Braggzelle als ein Lichtmodulator benutzt wird, variiert man einfach die Amplitude der Schall-intensität gemäß der Eingangsinformation, bei-spielsweise Video, digitale Daten, usw., wodurch einem Teil des gebeugten Strahls eine Amplitudenmodulation erteilt wird.

Ursprünglich wurden zur Erzeugung der akusti-schen Druckwelle rechtwinkelig und doppelrecht-winkelig geformte Elektroden benutzt. Die Figur 2 zeigt ein Elektrodenmuster 22 für eine Vorrichtung in Form einer einzigen akustooptischen Zelle. Auf der Oberfläche des Basiskörpers aus dem optischen Wechselwirkungsmaterial sind Elektroden so positioniert, daß sich die in Figur 6 gezeigten akustischen Wellen 12 in einer Richtung ausbreiten, die orthogonal zu der durch einen Pfeil 16 angedeuteten Richtung des einfallenden Lichtstrahls ist. Da die Elektroden 22 die Oberfläche des Basiskörpers 14 aus dem optischen Wechselwirkungsmaterial, an dem der akustische Wandler angebracht ist, nicht voll abdecken, füllen die akustischen Druckwellenfronten das Volumen des Basiskörpers 14 aus dem optischen Wechselwirkungsmaterial 14 nicht aus, sondern sind vielmehr auf den Raum 24 begrenzt, der in der Figur 4 durch gestrichelte Linien umrissen ist. Folglich erfahren die akustischen Wellenfronten aufgrund von Beugungs- und Interferenzeffekten eine in Figur 5 der Zeichnungen gezeigte Strahlaufweitung 26. Diese Ungleichmäßigkeiten erzeugen lokale Minima im akustischen Wellenfeld, welche den optischen Strahl weniger als gewünscht ablenken, zwar mit dem gleichen Winkel, jedoch mit kleinerer Intensität. Eine Lösung dieses Problems lag darin, die in den Figuren 2 und 3 gezeigte rechtwinkelige Form der Elektroden in eine in Figur 8 gezeigte gaußkurvenförmige Elektrode 28 oder in eine in Figur 7 gezeigte rhombusförmige Elektrode 30 abzuändern. Dies basiert auf theoretischen Berechnungen, die zeigen, daß daraus gleichmäßigere akustische Wellen resultieren.

Trotzdem bleibt selbst bei der rauten- oder gaußkurvenförmigen Elektrodenform 30 bzw. 28 ein Nachteil bei der Herstellung darin bestehen, daß die Fabriaktion mehrfacher Vorrichtungen ein Elektrodenmuster 32 nach Figur 3 auf einem Basiskörper 14, beispielsweise einer Platte oder Scheibe aus einem optischen Wechselwirkungsmaterial 14 erzeugt werden muß und individuelle Zellen durch Schneiden oder Durchtrennen des Basiskörpers 14 aus dem optischen Wechselwirkungsmaterial zwischen den Elektrodenmustern erhalten werden. Folglich ist es nicht nur notwendig, daß das Schneidwerkzeug sorgfältig zwischen den Elektrodenmustern ausgerichtet wird, sondern es wird auch jedes ein Elektrodenmuster umgebende Wechselwirkungsmaterial des Basiskörpers 14 vergeudet, weil es nichts zum optischen Wechselwirkungsvolumen der Vorrichtung beiträgt.

Die Erfinder haben entdeckt, daß durch vollständige Abdeckung der Wandlerschicht mit den Elektroden die Nachteile bei der Herstellung beseitigt werden und ebenso die Beugungs- und Interferenzeffekte gelöst werden. Durch die Konstruktion einer akustooptischen Vorrichtung, die voll durch die Elektroden abgedeckt ist - die Einzelheiten werden unten dargelegt - arbeitet die Vorrichtung als ein Wellenleiter, welcher die akustische Druckwelle begrenzt und das Auftreten der unerwünschten Beugungen verhindert. Daher werden gleichförmige akustische Druckwellen 34 nach Figur 9 erzeugt und Licht, das durch das durch den Basiskörper 14 aus optischem Wechselwirkungsmaterial hindurchgeht, wird ohne spezielle Abhängigkeit von der Strahlposition in diesem Körper abgelenkt.

Bei der Erzeugung akustooptischer Vorrichtungen wird ein beispielsweise block- oder plattenförmiger Basiskörper aus Wechselwirkungsmaterial präpariert. Wie oben dargelegt, enthält das Wechselwirkungsmaterial einen Stoff mit hohem akustooptischem Dynamikbereich, beispielsweise kristallines Tellurdioxid. Auf eine geeignete Schicht des Basiskörpers aus dem optischen Wechselwirkungsmaterial wird eine nicht dargestellte Bond- bzw. Bindeschicht aufgebracht. Die Bindeschicht ist elektrisch leitend und dient sowohl zum Schließen eines zum Betrieb der Vorrichtung notwendigen elektrischen Kreises als auch zum Binden einer dünnen Wandlerschicht 36 an den Basiskörper 14. Das für die Bindeschicht verwendete Material wird so ausgewählt, daß es sowohl eine gute Haftung zwischen der Wandlerschicht 36 und dem Basiskörper 14 als auch eine effiziente Kopplung akustischer Energie aus dem Wandler 36 in den Basiskörper 14 ermöglicht. Der dünne Wandler 36 deckt im wesentlichen die Oberfläche des Basiskörpers 14, auf den die Bindeschicht aufgebracht ist, ab. Danach wird auf den Wandler 36 ein Elektrodenmuster 32 nach Figur 3 aufgebracht, das zum Zuführen elektrischer Energie zum Wandler verwendet wird, um diesen in Schwingung und die akustischen Wellen in Bewegung zu setzen. In seinem vorliegenden Zustand bildet der Basiskörper 14 in Form eines Blockes oder einer Platte aus dem Wechselwirkungsmaterial viele akustooptische Vorrichtungen, die auf dem Basiskörper gewachsen und erzeugt werden. Vorrichtungen in Form von Einzelzellen werden dadurch erhalten, daß der Block 14 in den Bereichen zwischen Elektroden geschnitten oder durchtrennt wird, wodurch eine nach Figur 2 geformte Zelle erzeugt wird.

Beim Betrieb tritt Licht in die akustooptische Vorrichtung durch ein optisches Fenster 38 dieser Vorrichtung in der durch den Pfeil 40 angedeuteten Richtung ein. Die vom Wandler erzeugten akustischen Wellen breiten sich in Abwärtsrichtung aus, wechselwirken mit der optischen Welle und beugen diese zur Erzeugung eines gewünschten optischen Ausgangssignals. Da jedoch die Elektroden nicht den ganzen Bereich der Oberfläche 42 der akustooptischen Vorrichtung oder Zelle abdecken, ist der benutzbare Bereich des Basiskörpers aus Wechselwirkungsmaterial auf das Volumen 24 begrenzt, das in der Figur 4 als schraffierter Bereich angedeutet ist. Folglich resultiert eine unnütze Verschwendung von Wechselwirkungsmaterial.

Gemäß der Ausführungsform der Erfindung ist es nicht notwendig, die Elektroden in einem bekannten Muster nach Figur 2 anzubringen. Es wurde gefunden, daß eine größere Fabrikationseffizienz, ein einfacherer Lösungsweg und bessere Ergebnisse erhalten werden, wenn der Wandlerbereich vollständig mit Elektrodenmaterial abgedeckt und die Erzeugung der Elektroden in Form eines vorbestimmten Musters vermieden wird. Nach Figur 10 umfassen die Elektroden zwei Bereiche, die entlang eines in Längsrichtung verlaufenden trennenden Zwischenraums 44 geteilt sind, sodaß eine erste Elektrode 46 und eine zweite Elektrode 48 einer akustooptischen Vorrichtung definiert sind. Durch nachfolgendes Schneiden oder Durchtrennen des Basiskörpers aus dem Wechselwirkungsmaterial längs gestrichelter Linien 50 resultiert eine akustooptische Zelle nach Figur 11, welche die folgenden Vorteile und Eigenschaften aufweist. Zwischen die erste Elektrode 46 und die zweite Elektrode 48 wird zur Erzeugung der Schwingungen in dem dünnen Wandler, der unter den Elektroden angeordnet ist, eine elektrisch Quelle 52 geschaltet. Die elektrische Energie tritt durch eine Elektrode ein und wird durch den Wandler aus Lithiumniobat kapazitiv auf die darunter angeordnete elektrisch leitende Bindeschicht übertragen. Die Bindeschicht überträgt ihrerseits die elektrische Energie durch den Wandler auf die zweite Elektrode und dann zur Quelle 52 zurück. Die in dem Wandler erzeugte akustische Energie breitet sich in den darunter befindlichen Basiskörper aus dem Wechselwirkungsmaterial aus und füllt das ganze Volumen dieses Körpers mit akustischen Wellen. Die optischen Wellen treten in einer zu den akustischen Wellen senkrechten Richtung ein und werden nach bekannten Prinzipien kontrolliert und umgeformt.

Ein unmittelbarer Vorteil wird aus der Tatsache erhalten, daß eine Vergeudung oder Verschwendung vermieden wird, weil das ganze Volumen des Basiskörpers aus dem Wechselwirkungsmaterial für Anwendungszwecke verfügbar ist. Außerdem verhält sich die Vorrichtung wie ein Wellenleiter und die akustischen Wellen sind im wesentlichen gleichförmig, wodurch die Erzeugung unerwünschter Interferenzeffekte vermieden wird. Weitere Vorteile liegen darin, daß für die Anwendung der metallisierten Elektroden 46, 48 auf den Wandler ein einfacher Mechanismus verwendet werden kann und außerdem darin, daß die Schneid- oder Durchtrennungsschritte vereinfacht werden. Beispielsweise war es bisher notwendig, das Schneidwerkzeug und die Platte aus dem Wechselwirkungsmaterial sorgfältig auszurichten, um sicherzustellen, daß Schnitte exakt zwischen den Elektrodenmustern erzeugt werden. Bei dem vorliegenden Verfahren jedoch ist es nur notwendig, daß zur Erzeugung einzelner Zellen einer akustooptischen Vorrichtung Teile gleicher Größe entlang der Längsachse des Blocks oder der Platte geschnitten werden.

## Patentansprüche

1. Akustooptische Vorrichtung mit einem Basiskörper (14) aus einem Wechselwirkungsmaterial zur Kopplung akustischer Druckwellen mit optischen Wellen, der ein optisches Fenster zum Einkoppeln einer optischen Welle und eine akustische Grenzfläche zum Einkoppeln einer akustischen Welle in den Basiskörper (14) aufweist, und mit einer durch eine zwischenliegende Bindeschicht aus elektrisch leitendem Material flächig mit der akustischen Grenzfläche des Basiskörpers (14) verbundenen Wandlerschicht (36) zur Erzeugung der durch die Bindeschicht in den Basiskörper (14) eingekoppelten akustischen Druckwelle durch Anlegen eines elektrischen Signals zwischen zwei voneinander getrennten Metallelektrodenschichten (46, 48), **dadurch gekennzeichnet,** daß die Metallelektrodenschichten (46, 48) auf der Wandlerschicht (36) aufgebracht sind und diese mit Ausnahme eines spaltförmigen Zwischenraums (44) vollständig abdecken.

2. Vorrichtung nach Anspruch 1, **dadurch gekennzeichnet,** daß die Wandlerschicht (36) Lithiumniobat aufweist.

3. Vorrichtung nach Anspruch 1 oder 2, **dadurch gekennzeichnet**, daß das Wechselwirkungsmaterial des Basiskörpers (14) Tellurdioxid aufweist.

4. Verfahren zur Herstellung einer Vorrichtung nach einem der vorhergehenden Ansprüche, **dadurch gekennzeichnet**, daß auf eine Seitenfläche eines Ausgangskörpers aus dem Wechselwirkungsmaterial zur Kopplung akustischer Druckwellen mit optischen Wellen und mit einer ein mehrfaches einer vorbestimmten Länge des jeweiligen Basiskörpers der herzustellenden Vorrichtungen enthaltenden Länge eine elektrisch leitende Bindeschicht aufgebracht wird, auf der Bindeschicht eine Wandlerschicht (36) und auf der Wandlerschicht (36) zwei durch einen sich über die ganze Länge des Ausgangskörpers erstreckenden spaltförmigen Zwischenraum getrennte Metallelektrodenschichten erzeugt werden, welche mit Ausnahme des spaltförmigen Zwischenraums die Wandlerschicht (36) vollständig abdecken, und daß der auf diese Weise hergestellte Körper in der vorbestimmten Länge entsprechenden Abständen senkrecht zur Längsrichtung des spaltförmigen Zwischenraums durchtrennt wird.

## Claims

1. Acousto-optical device having a base body (14) consisting of an interactive material for coupling acoustic pressure waves with optical waves, which base body exhibits an optical window for coupling in an optical wave and an acoustic boundary surface for coupling in an acoustic wave into the base body (14), and having a transducer layer (36), which is connected over its surface with the acoustic boundary surface of the base body (14) by an intermediate binding layer consisting of electrically conductive material, for generating the acoustic pressure wave which is coupled into the base body (14) by the binding layer, by application of an electrical signal between two mutually separate metal electrode layers (46, 48), characterised in that the metal electrode layers (46, 48) are applied to the transducer layer (36) and entirely cover the latter with the exception of a slit-shaped intermediate space (44).

2. Device according to Claim 1, characterised in that the transducer layer (36) exhibits lithium niobate.

3. Device according to Claim 1 or 2, characterised in that the interactive material of the base body (14) exhibits tellurium dioxide.

4. Method of making a device according to one of the preceding claims, characterised in that an electrically conductive binding layer is applied to one lateral surface of a starting body consisting of the interactive material for coupling acoustic pressure waves with optical waves and having a length including a multiple of a predetermined length of the respective base body of the devices to be made, on the binding layer a transducer layer (36) is formed and on the transducer layer (36) two metal electrode layers which are separated by a slit-shaped intermediate space extending over the entire length of the starting body are formed, which entirely cover the transducer layer (36) with the exception of the slit-shaped intermediate space, and in that the body made in this manner is severed perpendicular to the longitudinal direction of the slit-shaped intermediate space at intervals corresponding to the predetermined length.

## Revendications

l'espace intercalaire en forme de fente.

1. Dispositif acousto-optique comportant un corps de base (14) réalisé en un matériau d'interaction pour le couplage d'ondes de pression acoustiques à des ondes optiques, et qui comporte une fenêtre optique pour l'injection d'une onde optique et une interface acoustique pour l'injection d'une onde acoustique dans le corps de base (14), et comportant une couche formant transducteur (36), qui est raccordée sur une certaine surface, par l'intermédiaire d'une couche intercalaire de liaison formée d'un matériau électriquement conducteur, à l'interface acoustique du corps de base (14), pour produire l'onde de pression acoustique injectée à travers la couche de liaison injectée dans le corps de base (14) à travers la couche de liaison, par application d'un signal électrique entre deux couches d'électrodes métalliques (46,48) séparées l'une de l'autre, caractérisé par le fait que les couches d'électrodes métalliques (46,48) sont déposées sur la couche formant transducteur (36) et recouvrent complètement cette dernière à l'exception d'un espace intercalaire en forme de fente.

2. Dispositif suivant la revendication 1, caractérisé par le fait que la couche formant transducteur (36) contient du niobate de lithium.

3. Dispositif suivant la revendication 1 ou 2, caractérisé par le fait que le matériau d'interaction du corps de base (14) contient du dioxyde de tellure.

4. Procédé pour fabriquer un dispositif suivant l'une des revendications précédentes, caractérisé par le fait que sur une surface latérale d'un corps de base formé d'un matériau d'interaction pour le couplage d'ondes acoustiques de pression à des ondes optiques et possédant une longueur incluant un multiple d'une longueur prédéterminée du corps de base des dispositifs devant être fabriqués, on dépose une couche de liaison électriquement conductrice, on forme sur la couche de liaison une couche formant transducteur (36) et sur cette couche formant transducteur (36), on forme deux couches d'électrodes métalliques séparées par un espace intercalaire en forme de fente, qui s'étend sur toute la longueur du corps de départ, et qui recouvrent complètement la couche formant transducteur (36) à l'exception de l'espace intercalaire en forme de fente, et qu'on subdivise le corps fabriqué de cette manière à des intervalles qui correspondent à la longueur prédéterminée, perpendiculairement à la direction longitudinale de

FIG. 1

Stand der Technik

FIG. 2

Stand der Technik

FIG. 3

Stand der Technik

FIG. 4

Stand der Technik

14

26

*Stand der Technik*

## FIG. 5

18   20

$2\Theta_B$

14

10   12

16   *Stand der Technik*

$\Theta_B$

## FIG. 6

30

*Stand der Technik*
## FIG. 7

28

*Stand der Technik*
## FIG. 8

36   34   14

## FIG. 9

FIG. 10

FIG. 11